# EUROPEAN PATENT APPLICATION

(11) **EP 4 764 663 A1**
(43) Date of publication of application: **24.06.2026**
(21) Application number: 25225677.1
(22) Date of filing: 19.12.2025
(51) Int. Cl.: G02B 27/01, G02B 27/28

(54) **MULTI-FOCAL AUGMENTED REALITY HEAD-UP DISPLAY SYSTEM AND METHOD**

(30) Priority: 19.12.2024 KR 20240190884
(71) Applicant: Kwangwoon University Industry-Academic Collaboration Foundation, Seoul 01897 (KR)
(72) Inventor: HWANG, Leehwan, 01890 Seoul (KR); LEE, Seunghyun, 01890 Seoul (KR)
(74) Representative: advotec.

(57) **Abstract**

The present disclosure relates to a multi-focal head-up display (MHUD) system and method to solve a visual fatigue problem generated in a vehicle head-up display and implement an augmented reality (AR) function. The present disclosure provides a multi-focal augmented reality head-up display (MHUD) system including an image projector which generates and emits a plurality of beams, an optical device which guides the plurality of beams emitted from the image projector to individual paths, a polarization control device which controls polarization states of the plurality of beams incident from the optical device, and a plurality of holographic optical elements (HOEs) which receives the plurality of beams emitted from the polarization control device to project a virtual image plane at different focal distances.

## Description

### CROSS-REFERENCE TO RELATED APPLICATIONS

This application claims the priority of Korean Patent Application No. 10-2024-0190884 filed on December 19, 2024, in the Korean Intellectual Property Office, the disclosure of which is incorporated herein by reference.

### BACKGROUND

### Field

The present disclosure relates to a vehicle head-up display (HUD) system and method and more particularly, to a multi-focal head-up display (MHUD) system and method to solve a visual fatigue problem generated in a vehicle head-up display and implement an augmented reality (AR) function.

### Description of the Related Art

A head-up display (hereinafter, abbreviated as "HUD") is a device designed to allow a driver to check information required to drive a vehicle while looking ahead and unlike a dashboard of the related art, displays information by projecting the information onto a windshield or a separate reflecting plate. The HUD technology contributes to improving safety and efficiency by minimizing a visual shift while driving and specifically, is widely used to provide information such as a speed, a navigation, or a road condition.

In accordance with the recent development of the automotive industry, the augmented reality (AR) technology has been integrated into HUDs, thereby overcoming the limitations of existing HUDs and providing drivers with a more intuitive and safer driving experience. This may increase the accuracy and the efficiency of information delivery by going beyond simple information delivery and providing digital information to be combined with the actual road environment in real time. If the augmented reality technology is utilized, a navigation route is directly displayed on the road and a pedestrian or a dangerous zone is highlighted to enhance driver's concentration and safety.

### [Related Art Document]

### [Patent Document]

KR 10-2022-0101682 A, 2022.07.19.
KR 10-2021-0125071 A, 2021.10.15.
KR 10-2023-0089420 A, 2023.06.20.
KR 10-1866683 B1, 2018.06.04.

### SUMMARY

However, despite technological advances, existing HUD systems had several problems.

First, in the existing HUD system, visual fatigue problems may occur. In the existing HUD system, all information needs to be displayed at a single focal distance so that a driver needs to repeatedly adjust a focus between an actual road and the HUD information. Accordingly, there is an accommodation-vergence conflict which is caused between focus accommodation and eye vergence. This causes the driver's visual fatigue and increases the discomfort during long-time driving. Specifically, the augmented reality based HUD displays a virtual object on the road so that the focal difference from the actual road may be more significant.

Second, in the existing HUD system, there may be information visibility and interpretation issues. In the existing HUD system, if all information is projected at a single focal distance, that is, on a single plane, important information and secondary information may overlap or be mixed. This disturbs the driver from quickly accessing necessary information to increase the risk of accident. Further, during the daytime or in the bright environment, there may be a problem in that the projected information of the HUD is not seen well.

Third, there is a limitation of implementing the augmented reality in the existing HUD system. In order to effectively implement the augmented reality technology in the HUD, a virtual object which matches an actual distance of the road and the environment needs to be accurately displayed. However, the existing HUD system supports only the single focal distance, so that if the virtual object appears to be inconsistent with the actual distance, it is difficult for a user to intuitively perceive the information. This problem may degrade the accuracy and a reliability of a function of displaying a navigation route or highlighting a risky element based on an augmented reality.

Accordingly, the present disclosure may be proposed to solve the above-mentioned problems of the related art.

A first object to be achieved by the present disclosure is to provide a multi-focal augmented reality head-up display system and method which essentially support multi-focal distance to solve the visual fatigue problem occurring in the HUD system of the related art to allow a driver to naturally perceive the information without switching the focus between the road and the HUD information.

Further, a second object to be achieved by the present disclosure is to provide a multi-focal augmented reality head-up display system and method which display information matching an actual road environment by effectively integrating an augmented reality technology with the HUD to help driver's intuitive understanding to improve a driving stability and provide an optimal driving experience to the driver.

Further, a third object to be achieved by the present disclosure is to simplify a multi-plane HUD (MHUD) design which is complex and has a large volume. The multi-plane HUD requires complex optical and mechanical designs to separately display information on various planes and uses several optical components (lenses or reflective planes) to increase a size and a weight of the system. Accordingly, the third object is to provide a multi-focal augmented reality head-up display system and method which simplify a design of the multi-plane HUD to reduce a volume and a weight and simplify a structure.

Objects to be achieved by the present disclosure are not limited to the above-described objects and various objects may be additionally provided by means of technologies described through exemplary embodiments to be described below.

In order to achieve the above-described objects, according to an aspect of the present disclosure, a multi-focal augmented reality head-up display system includes an image projector which generates and emits a plurality of beams; an optical device which guides the plurality of beams emitted from the image projector to individual paths; a polarization control device which respectively controls polarization states of the plurality of beams incident from the optical device; and a plurality of holographic optical elements (HOEs) which respectively receives the plurality of beams emitted from the polarization control device to project a virtual image plane at different focal distances.

Further, the multi-focal augmented reality head-up display system may further include an expander which uniformizes energies and intensities of the plurality of beams incident from the optical device to transmit the beams to the polarization control device.

Further, the polarization control device respectively controls polarization directions of the plurality of beams guided from the optical device to match the polarization states of the plurality of beams and a polarization state designed for the plurality of HOEs, respectively.

Further, the optical device may be a micro electromechanical system (MEMS) mirror.

Further, the plurality of beams may include a red beam and a blue beam.

Further, the plurality of HOEs includes: a first HOE which receives a red beam emitted from the polarization control device to project a virtual image plane at a first focal distance; and a second HOE which receives a blue beam emitted from the polarization control device to project a virtual image plane at a second focal distance which is different from the first focal distance.

Further, the polarization control device controls polarization directions of the red beam and the blue beam incident from the optical device to match the polarization states of the red beam and the blue beam and a polarization state designed for the first and second HOEs.

Further, the first focal distance may be shorter than the second focal distance.

Further, the first focal distance is 1 m and the second focal distance may be 1.5 m.

Further, the red beam has a wavelength band of 650 nm and the blue beam may have a wavelength of 450 nm.

In order to achieve the above-described objects, according to another aspect of the present disclosure, a multi-focal augmented reality head-up display method includes a process of generating and emitting a plurality of beams by means of an image projector; a process of guiding the plurality of beams to individual beams by means of an optical device; a process of respectively adjusting polarization states of the plurality of beams by means of a polarization control device; and a process of respectively receiving the plurality of beams emitted from the polarization control device to project a virtual image plane at different focal distances, by means of a plurality of holographic optical elements (HOEs).

Further, the multi-focal augmented reality head-up display method may further include a process of respectively uniformizing energies and intensities of the plurality of beams incident from the optical device to transmit the beams to the polarization control device by means of an expander.

Further, in the process of respectively adjusting polarization states of the plurality of beams by means of a polarization control device, polarization directions of the plurality of beams guided from the optical device are controlled to match the polarization states of the plurality of beams and a polarization state designed for the plurality of HOEs, respectively.

Further, the plurality of HOEs may include: a first HOE which receives a red beam emitted from the polarization control device to project a virtual image plane at a first focal distance; and a second HOE which receives a blue beam emitted from the polarization control device to project a virtual image plane at a second focal distance which is different from the first focal distance.

Further, the first focal distance may be shorter than the second focal distance.

Further, the first focal distance is 1 m and the second focal distance may be 1.5 m.

Further, the red beam has a wavelength band of 650 nm and the blue beam may have a wavelength of 450 nm.

As described above, according to the exemplary embodiment of the present disclosure, the following effects may be obtained.

First, a single optical system may provide 2D images with variable focus and controllable multi-depth. By doing this, the single focus problem of the existing HUD system is solved and the driver may obtain more intuitive information at various depths. Specifically, a micro electro mechanical systems (MEMS) mirror and a holographic optical element (HOE) are combined to deliver information at each specific distance, thereby reducing a visual fatigue and greatly improving a driving safety.

Second, a single image protector and a polarization control device (polarization switchable display) are utilized to provide more vividly information required by the driver through binocular parallax. That is, different images are delivered to a left eye and a right eye by a polarization switching technique using a polarization control device to provide higher immersion and more accurate information. This may enhance the driver experience by making the implementation of augmented reality features more realistic.

Third, as autonomous vehicles develop, a foundation for actively utilizing the windshield as a HUD screen is provided. The usability of screens in the vehicle is increased and a multi-depth HUD which adjusts a focus according to various situations while driving may be provided. This will be of great help to drivers in real-time understanding of the situation during autonomous driving and selectively providing only the necessary information, and ultimately, it could become a new HUD standard for the autonomous driving era.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a conceptual view illustrating a multi-focal augmented reality head-up display system according to an exemplary embodiment of the present disclosure;
FIG. 2 is a diagram of a system illustrated in FIG. 1;
FIG. 3 is a flowchart illustrating a multi-focal augmented reality head-up display method according to an exemplary embodiment of the present disclosure; and
FIG. 4 is a diagram illustrating a holographic optical element (HOE) recording system according to an example of the present disclosure.

### DETAILED DESCRIPTION OF THE EMBODIMENT

Hereinafter, the exemplary embodiment of the present disclosure will be described with reference to the accompanying drawings and exemplary embodiments as follows. Scales of components illustrated in the accompanying drawings are different from the real scales for the purpose of description, so that the scales are not limited to those illustrated in the drawings.

Hereinafter, advantages and features of the present disclosure, and methods for accomplishing the same will be more clearly understood from exemplary embodiments described below with reference to the accompanying drawings. Throughout the present specification, like reference denotes like component. Further, the term of "A and/or B" means both A and B or any one of A or B. Further, components illustrated in each drawing may be exaggerated in size and shape, but this is for convenience of description, but is not intended to be limiting.

Unless particularly stated otherwise in the present specification, a singular form also includes a plural form. Further, a component and an operation which are mentioned with "including (or comprising) do not preclude the presence of addition of one or more other components or operations. Unless otherwise defined, all terms (including technical and scientific terms) used in the present specification may be used as the meaning which may be commonly understood by the person with ordinary skill in the art, to which the present invention belongs. It will be further understood that terms defined in commonly used dictionaries should not be interpreted in an idealized or excessive sense unless defined.

Hereinafter, the embodiments of the present disclosure will be specifically described with reference to the accompanying drawings.

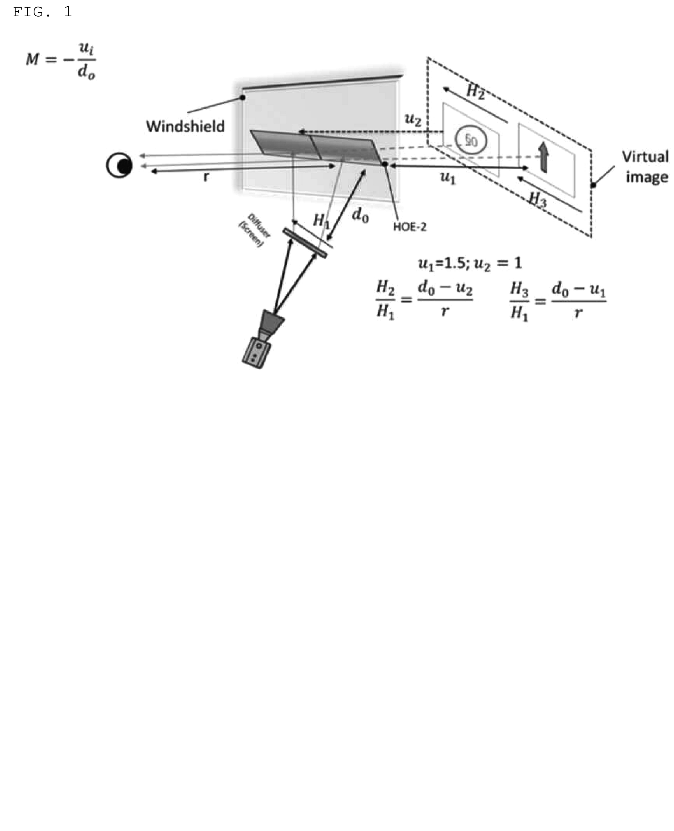

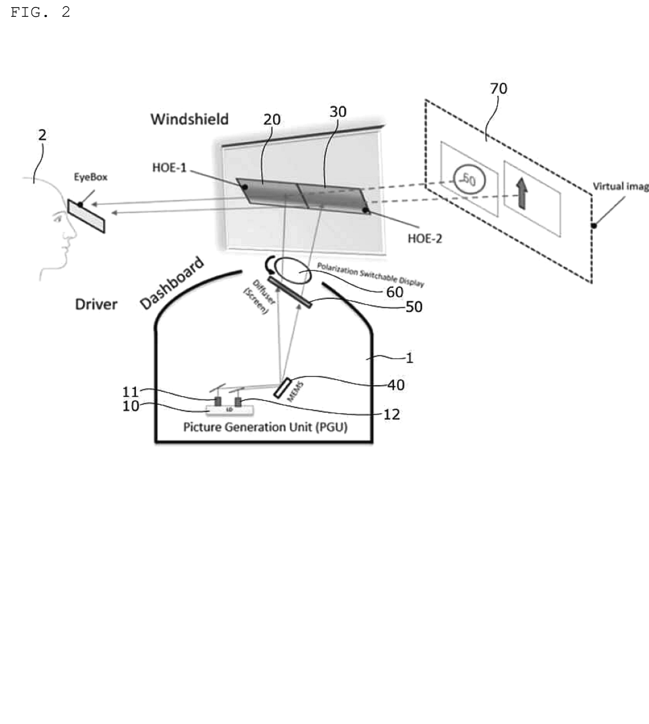

FIG. 1 is a schematic conceptual view illustrating a multi-focal augmented reality head-up display system according to an exemplary embodiment of the present disclosure and FIG. 2 is a diagram of a system illustrated in FIG. 1.

Referring to FIGS. 1 and 2, a system according to an exemplary embodiment of the present disclosure combines an image projector 10 which is a single projection generating unit (PGU) and first and second holographic optical elements (HOE) 20 and 30 to generate at least two virtual images 70 on a plane by utilizing light spectrum and angle selectivity.

The image projector 10 may emit light with a specific wavelength for interaction with a plurality of holographic optical elements, for example, first and second holographic optical elements (hereinafter, referred to as "first and second HOEs"). Such an image projector 10 includes a light source thereinside and the light source may use a light emitting diode (LED), laser, or other appropriate optical light emitting diode. For example, a laser diode (LD) with characteristics such as a high output, a high energy efficiency, a narrow bandwidth, high optical focusing, miniaturization and light weight, and a long lifespan may be used.

As illustrated in FIG. 2, the image projector 10 includes a red laser source 11 and a blue laser source 12. The red laser source 11 is a light source which generates red light with a narrow bandwidth and a high output and provides an optical base for generating an independent virtual image. That is, the red light is projected on a specific focal plane through the first HOE 20 to be used to implement one of projected virtual image planes. The blue laser source 12 is a light source which generates blue light with a narrow bandwidth and a high output and uses a wavelength band different from that of the red light and interacts with the second HOE 30 to generate a virtual image on an independent focal plane.

As illustrated in FIG. 1, red light (hereinafter, referred to as 'a red beam') and blue light (hereinafter, referred to as 'a blue beam') emitted from the red laser source 11 and the blue laser source 12 of the image projector 10 are incident to the optical device 40, respectively. The optical device 40 dynamically controls a direction, an angle, or a position of incident red beam and blue beam to be accurately guided to the first and second HOEs 20 and 30. The optical device 40 may be a micro electromechanical systems (MEMS) mirror as an example.

The MEMS mirror may include a mirror, a driving device, a suspension, and a control circuit. The mirror reflects the laser beam with a silicon wafer based reflective surface. The driving device drives the mirror using electrostatic, electromagnetic, thermal, or piezoelectric methods. The suspension supports, rotates, or moves a surface of the mirror. For example, the suspension may be designed to rotate using a torsional hinge at a high speed. The control circuit controls a movement of the mirror and receives an input signal to adjust an angle and a position of the mirror.

As illustrated in FIG. 1, the red beam and the blue beam reflected from the optical device 40 are transmitted to a diffuser 50. The diffuser 50 may perform beam homogenization, wide angle diffusion, and speckle reduction on the red beam and the blue beam reflected from the optical device 40. That is, the optical homogenization is provided, various focal planes are supported, and a viewing angle expands in the system.

The beam reflected from the optical device 40 is highly concentrated so that a beam energy may be concentrated at the center. Therefore, the diffuser 50 uniformly disperses beam energy and intensity to uniformize a brightness and a quality of the image, thereby uniformly distributing high-luminance point light source of the beam in a wide area. Further, the beam is highly directional (narrow divergence) to be dispersed at various angles to cover a wide area on an image plane. Specifically, when multi-planes, for example, red and blue independent focal planes are formed, the beam is diffused at an appropriate angle to expand a focal area. Further, the beam is highly coherent to cause irregular brightness patterns called speckle so that a direction and a phase of beam are randomized to reduce the speckle pattern, thereby generating smoother and sharper images.

As described above, the diffuser 50 disperses the red beam reflected from the optical device 40 to appropriately expand to reach the focal plane of the first HOE 20 and disperses the blue beam in the same manner as the red beam to be appropriately dispersed on the focal plane of the second HOE 30, thereby forming different depth information. That is, the red beam and the blue beam reflected from the optical device 40 uniformly reach different focal planes through the diffuser 50 to generate a complex multilayered image.

As illustrated in FIG. 1, the beam diffused by the diffuser 50 is transmitted to the polarization control device 60. The polarization control device 60 is a polarization switchable display and dynamically controls polarization states of the red beam and the blue beam transmitted from the diffuser 50.

The polarization control device 60 is a device which controls a polarization direction (vertical, horizontal, and circular) of the red beam and the blue beam transmitted from the diffuser 50 and maximizes the light processing efficiency in the other optical element, that is, the first and second HOEs 20 and 30 by switching the polarization state of the beam. For example, the red beam is vertically polarized, and the blue beam is horizontally polarized. Thereafter, the first and second HOEs 20 and 30 may selectively process the beam based on each polarization state.

The HOE element is designed to efficiently interact with light in a specific polarization state. A plurality of HOE elements may be included. If the polarization states of the incident red beam and blue beam do not match (aligned with) the polarization states of the first and second HOE 20 and 30, beam reflection, refraction, or diffraction efficiencies may be deteriorated. Accordingly, the polarization control device 60 matches the polarization states of the red beam and the blue beam incident from the diffuser 50 and an optimized polarization state designed for the first and second HOEs 20 and 30 (converts the polarization states of the red beam and the blue beam so as to match the polarization state of the first and second HOEs 20 and 30) .

The polarization control device 60 independently adjusts the red beam and the blue beam to generate information in positions with different depths to implement a multi-focal plane. Accordingly, the red beam and the blue beam whose polarization state is controlled by the polarization control device 60 pass through the first and second HOE 20 and 30 to generate an independent image on each focal plane. Accordingly, a multilayered image may be implemented on the augmented reality display. Further, in the vehicle environment, light (for example, sunlight or headlight) entering from the outside is bright to degrade the visibility. Accordingly, the polarization control device 60 controls the polarization state of the external light entering to the display, thereby reducing interference of the external light so as not to affect the performance of the display.

Such a polarization control device 60 transmits different images to the left eye and the right eye even with a single display panel. This quickly switches the polarization state to transmit intended light to each eye. This principle may be implemented by differently projecting an image generated by the display panel according to the polarization state of light. The panel quickly switches the polarization state to send light in a specific polarization state to the left eye and the right eye only with the single display panel, respectively, to transmit different images.

The first HOE 20 receives a red beam adjusted in the polarization state control device 60 as an input. At this time, the red beam has a controlled directivity and a specific waveform and is optimized for a wavelength and an angle selectivity of the first HOE 20. The first HOE 20 projects a red beam on a virtual image plane at a short-range focal distance (hereinafter, referred to as 'a first focal distance'), for example, at a distance of 1 m. The first HOE 20 is optimized to diffract and refract an image according to a specific wavelength (for example, 650 nm) and an incident angle of the red beam. Accordingly, the red beam may form a sharp and accurate virtual image at a short distance.

The first HOE 20 does not selectively respond to light with the other wavelength or angle. This is a spectrum and angle selectivity to process only the red beam to generate an accurate virtual image. By doing this, the interference due to an external light source or other color light may be minimized. The virtual image generated by the first HOE 20 is transmitted to eyes of a user (driver). A user may see a sharp red image from a distance of 1 m, which could be suitable for short-range information in an augmented reality display (for example, dashboard data, road condition indications, etc.).

The second HOE 30 receives a blue beam adjusted in the polarization state control device 60 as an input. At this time, unlike the red beam, the blue beam has a shorter wavelength (for example, 450 nm) and is adjusted in accordance with the wavelength and angle selectivity of the second HOE 30. The second HOE 30 projects the blue beam on a virtual image plane at a long-range focal distance (hereinafter, referred to as 'second focal distance'), for example, at a distance of 1.5 m, which is longer (farther) than the first focal distance. By doing this, a virtual image may be formed at a long focal distance. This may be appropriate to display long-range information (for example, navigation arrows, road signs, etc.) to the user.

The second HOE 30 selectively processes only light with a specific wavelength and angle to generate a virtual image. This ensures that the interference with the first HOE 20 is suppressed and each HOE independently operates. The virtual image generated in the second HOE 30 is transmitted to the user through diffracted and refracted light and the user may see a sharp blue image at the distance of 1.5 m. This is suitable for displaying long-range information (for example, road guidance, warning messages, etc.).

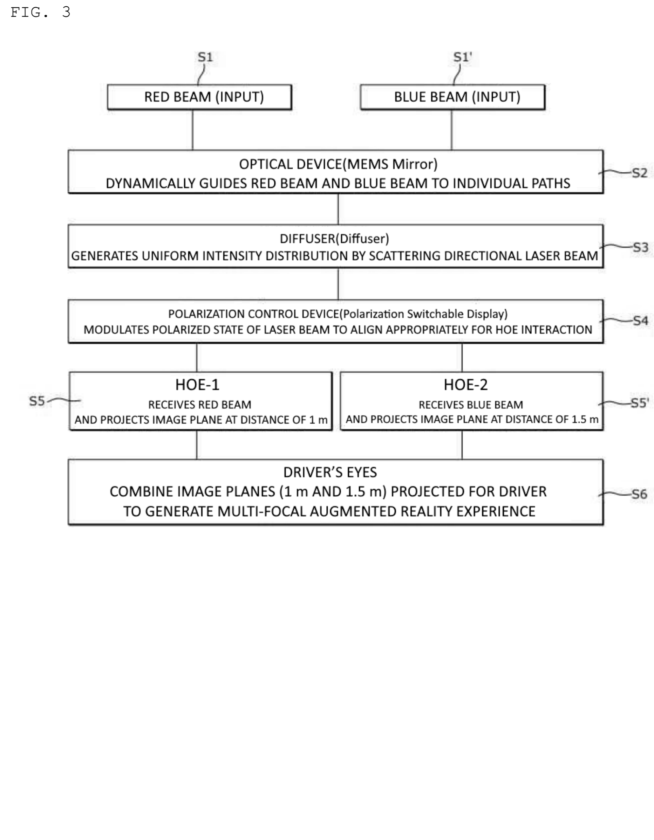

FIG. 3 is a flowchart schematically illustrating a multi-focal augmented reality head-up display method according to an exemplary embodiment of the present disclosure.

Referring to FIGS. 2 and 3, a multi-focal augmented reality head-up display method using a multi-focal augmented reality head-up display system according to an exemplary embodiment of the present disclosure is as follows:
A red beam and a blue beam are input, respectively in steps S1 and S1'. The image projector 10 generates the red beam and the blue beam through the red laser source 11 and the blue laser source 12 to emit the beams to the optical device 40.

Next, the red beam and the blue beam are dynamically guided to individual paths in step S2. The optical device 40 dynamically controls directions, angles, or positions of the red beam and the blue beam emitted from the image projector 10 to be accurately guided to the paths, that is, the first and second HOEs 20 and 30.

Next, a directional laser beam is scattered to generate uniform intensity distribution in step S3. The diffuser 50 performs homogenization, wide angle diffusion, and speckle reduction on the red beam and the blue beam incident through the optical device 40 to uniformly distribute and output the beam energy and intensity.

Next, the polarization state of the laser beam is modulated to be aligned appropriately for interaction with the HOE in step S4. The polarization control device 60 controls a polarization direction (vertical, horizontal, or circular) of the red beam and the blue beam transmitted from the diffuser 50 to match the polarization states of the red beam and the blue beam incident from the diffuser 50 and polarization states designed for the first and second HOEs 20 and 30.

Next, the red beam is received to project an image plane at a first focal distance (short distance, 1 m) and the blue beam is received to project an image plane at a second focal distance (long distance, 1.5 m) in steps S5 and S5'. The first HOE 20 focuses a red beam incident from the polarization control device 60 on a virtual image plane at the first focal distance (1 m) and the second HOE 30 focuses a blue beam on a virtual image plane at the second focal distance (1.5 m).

Next, projected image planes are combined with the virtual image planes at the first focal distance (1 m) and the second focal distance (1.5 m) for a driver to provide a multi-focal augmented reality experience in step S6.

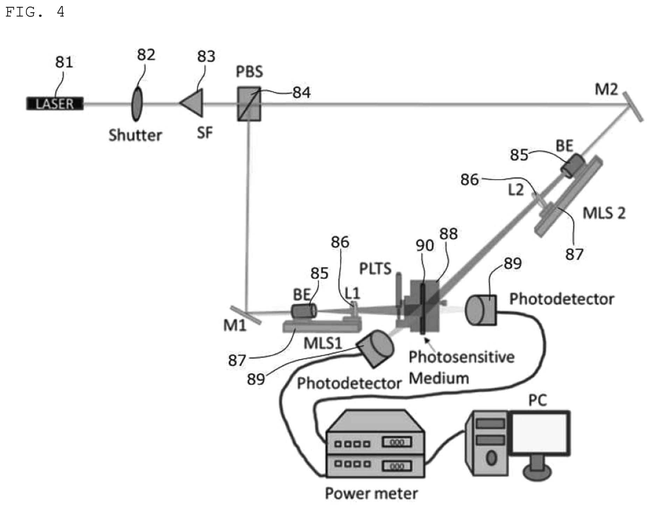

FIG. 4 is a schematic diagram illustrating a holographic optical element (HOE) recording system according to an embodiment of the present disclosure.

Referring to FIG. 4, a HOE recording system according to an exemplary embodiment of the present disclosure is a system which records optical information to manufacture a HOE element having a specific optical property and may be used to manufacture the first and second HOEs 20 and 30. The configuration may include a laser source 81, an electronic shutter 82, a spatial filter 83, a beam splitter 84, a beam expander 85, a collimating lens 86, a motorized linear stage (MLS) 87, a precision linear translation stage (PLTS) 88, a photodetector 89, and a holographic recording medium (holographic plate) 90.

The laser source 81 provides a laser source for recording HOE. The laser source uses a monochromatic and highly coherent laser and includes red laser (650 nm), green laser (532 nm), and blue laser (450 nm).

The electronic shutter 82 controls an exposure time of a laser beam for accurate recording of HOE.

The spatial filter 83 removes a noise of the laser beam and guarantees a high quality of Gaussian beam. The spatial filter 83 may be configured by a micro pin hole and a lens.

The beam splitter 84 is a polarizing beam splitter (PBS) and splits incident beam into different paths according to a polarization state. That is, the laser beam is divided to two paths. The beam splitter 84 divides the beam to a reference beam path (collimated light to be transmitted to the HOE) and an object beam path (light modified to generate a desired interference pattern). The beam divided by the beam splitter 84 is guided to a specific path through reflection mirrors M1 and M2.

The beam expander 85 adjusts a size of the interference pattern by expanding beams incident through the reflection mirrors M1 and M2 to be wide and expands the laser beam for uniform exposure in a larger area. That is, the beam expander expands a diameter of the laser beam to uniformly expose the entire recording medium.

The beam expanding by the beam expander 85 may include some convergent or divergent components so that the collimating lens 86 precisely converts the beam to a collimated beam to increase the accuracy of the interference fringe. By doing this, the direction of the beam is constantly maintained to precisely reach a desired position of the recording medium, thereby improving the spatial accuracy and the recording quality of the HOE.

The motorized linear stage 87 precisely moves the positions of the beam expander 85 and the collimating lens 86 to precisely move the position of the laser beam. The motorized linear stage adjusts the position of the medium during a HOE recording process or dynamically changes the path for forming the interference pattern so that the motorized linear stage moves the collimating lens with a micrometer precision and adjusts a distance between the lens and the holographic recording medium 90 to modify a recorded focal distance of the HOE.

The precision linear translation stage 88 vertically or horizontally moves the holographic plate 90 to record various HOEs on a single recording medium. Various HOEs are recorded in different positions using the holographic recording medium 90 mounted in the precision linear translation stage 88.

The photodetector 49 monitors an intensity and a quality of the laser beam in real time to measure the intensity of the reference beam and the object beam to ensure that the inference pattern is uniformly formed. Such a photodetector 49 may include a diffraction beam detector which measures an intensity of diffracted beam to monitor a recording efficiency and a transmission beam detector which measures an intensity of transmitted beam to monitor the beam alignment state.

The holographic plate 90 records an interference pattern through an input beam to manufacture a final HOE element.

As described above, although in the system according to the exemplary embodiment of the present disclosure, a technology of projecting a red beam and a blue beam with different wavelength bands on a virtual image plane has been described, this is for convenience of description. Therefore, the system is also configured to project at least two beams, among at least one of the red beam and the blue beam and/or beams excluding the red beam and the blue beam, on the virtual image plane. For example, the image projector 10 may generate and emit at least two or more beams. At this time, the plurality of beams includes at least one of the red beam and the blue beam or may include a beam in the other wavelength excluding the red beam and the blue beam. The optical device 40 guides a plurality of beams emitted from the image projector 10 to individual paths, the expander 50 transmits a plurality of beams incident into different paths from the optical device 40 to the polarization control device 60, and the polarization control device 60 adjusts polarization states of the plurality of beams transmitted from the diffuser 50 to transmit the beams to the plurality of HOEs. The number of the plurality of HOEs corresponds to the number of the plurality of beams emitted from the polarization control device 60 and projects the plurality of beams on a virtual image plane respectively.

As described above, the exemplary embodiment of the present disclosure has been described using specific terms, but the terms are just used to clearly describe the present disclosure. Further, it is obvious that various changes and modifications may be applied to the exemplary embodiment of the present disclosure and the described terms without departing from the technical spirit and scope of the following claims. Such modified embodiments should not be understood separately from the spirit and scope of the present disclosure, but should be considered to fall within the claims of the present disclosure.

## Claims

1. A multi-focal augmented reality head-up display system, comprising:
an image projector which generates and emits a plurality of beams;
an optical device which guides the plurality of beams emitted from the image projector to individual paths;
a polarization control device which respectively controls polarization states of the plurality of beams incident from the optical device; and
a plurality of holographic optical elements (HOEs) which respectively receives the plurality of beams emitted from the polarization control device to project a virtual image plane at different focal distances.

2. The multi-focal augmented reality head-up display system according to claim 1, further comprising:
an expander which uniformizes energies and intensities of the plurality of beams incident from the optical device to transmit the beams to the polarization control device.

3. The multi-focal augmented reality head-up display system according to claim 2, wherein the polarization control device respectively controls polarization directions of the plurality of beams guided from the optical device to match the polarization states of the plurality of beams and a polarization state designed for the plurality of HOEs, respectively.

4. The multi-focal augmented reality head-up display system according to claim 2 or 3, wherein the optical device is a micro electro mechanical system (MEMS) mirror.

5. The multi-focal augmented reality head-up display system according to one of claims 2 to 4, wherein the plurality of beams includes a red beam and a blue beam.

6. The multi-focal augmented reality head-up display system according to one of claims 2 to 5, wherein the plurality of HOEs includes:
a first HOE which receives a red beam emitted from the polarization control device to project a virtual image plane at a first focal distance; and
a second HOE which receives a blue beam emitted from the polarization control device to project a virtual image plane at a second focal distance which is different from the first focal distance.

7. The multi-focal augmented reality head-up display system according to claim 6, wherein the polarization control device controls polarization directions of the red beam and the blue beam incident from the optical device to match the polarization states of the red beam and the blue beam and a polarization state designed for the first and second HOEs.

8. The multi-focal augmented reality head-up display system according to claim 6 or 7, wherein the first focal distance is shorter than the second focal distance, wherein the first focal distance being 1 m and the second focal distance is 1.5 m and/or wherein the red beam has a wavelength band of 650 nm and the blue beam has a wavelength of 450 nm.

9. A multi-focal augmented reality head-up display method, comprising:
a process of generating and emitting a plurality of beams by means of an image projector;
a process of guiding the plurality of beams to individual paths by means of an optical device;
a process of respectively adjusting polarization states of the plurality of beams by means of a polarization control device; and
a process of respectively receiving the plurality of beams emitted from the polarization control device to project a virtual image plane at different focal distances, by means of a plurality of holographic optical elements (HOEs).

10. The multi-focal augmented reality head-up display method according to claim 9, further comprising:
a process of respectively uniformizing energies and intensities of the plurality of beams incident from the optical device to transmit the beams to the polarization control device by means of an expander.

11. The multi-focal augmented reality head-up display method according to claim 10, wherein in the process of respectively adjusting polarization states of the plurality of beams by means of a polarization control device, polarization directions of the plurality of beams guided from the optical device are controlled to match the polarization states of the plurality of beams and a polarization state designed for the plurality of HOEs, respectively.

12. The multi-focal augmented reality head-up display method according to claim 10 or 11, wherein the plurality of HOEs includes:
a first HOE which receives a red beam emitted from the polarization control device to project a virtual image plane at a first focal distance; and
a second HOE which receives a blue beam emitted from the polarization control device to project a virtual image plane at a second focal distance which is different from the first focal distance.

13. The multi-focal augmented reality head-up display method according to claim 12, wherein the first focal distance is shorter than the second focal distance.

14. The multi-focal augmented reality head-up display method according to claim 12 or 13, wherein the first focal distance is 1 m and the second focal distance is 1.5 m.

15. The multi-focal augmented reality head-up display method according to one of claims 12 to 14, wherein the red beam has a wavelength band of 650 nm and the blue beam has a wavelength of 450 nm.
